# EUROPEAN PATENT SPECIFICATION

(11) **EP 1 491 443 B1**
(45) Date of publication and mention of the grant of the patent: **07.03.2007**
(21) Application number: 04014477.6
(22) Date of filing: 21.06.2004
(51) Int. Cl.: B64D 13/06

(54) **Air conditioning system**
Klimatisierungssystem
Système de climatisation

(30) Priority: 25.06.2003 GB 0314757
(43) Date of publication of application: 29.12.2004
(73) Proprietor: Honeywell Normalair-Garrett (Holdings) Limited, Yeovil, Somerset BA20 2YD (GB)
(72) Inventor: Axe, Richard James, Yeovil Somerset BA91 3PE (GB); Hunt, Richard Grant, Yeovil Somerset BA21 5SR (GB)
(74) Representative: Lucking, David John

(56) References cited:
- EP-A- 0 542 909
- EP-A- 0 581 237
- EP-A- 1 190 946
- US-A1- 2003 051 492
- US-B1- 6 257 003

## Description

### Description of Invention

This invention relates to an air cycle air conditioning system and more particularly but not exclusively, to an air cycle air conditioning system for conditioning recirculating cabin air in an aircraft.

This background art is for example illustrated by European Patent EP-B-0 542 909.

Various proposals have been put forward for such an air conditioning system, including in our previous International patent application number WO-A-03/086859 in which there is a heat load heat exchanger to which the recirculating cabin air is provided, for cooling, by expanded and cooler working air from a first expansion turbine, prior to the working air being further expanded and cooled by a second expansion turbine. The cooled recirculating cabin air and the expanded and cooled working air from the second expansion turbine are then mixed and the mixed air introduced into the cabin.

Such a system operates satisfactorily where the volume of the cabin air recirculated is sufficiently large, but for low recirculating air flows even where the cabin air is particularly warm, the system proposed in our prior International patent application operates inefficiently, because insufficient energy is recovered from the recirculating cabin air by the heat load heat exchanger, for the second expansion turbine, to drive a compressor upstream of the first expansion turbine, necessary for air cycle cooling.

According to a first aspect of the invention we provide an air cycle air conditioning system according to claim 1.

Thus by providing the heat exchanger, heat may be imparted to the expanded air from the first expansion turbine to improve the efficiency of the system, particularly where the second expansion turbine drives a compressor of the working air, upstream of the first expansion turbine, which compressor pressurises the working air.

The heat load heat exchanger in which a heat load of the recirculating enclosure air of the recirculation loop is exchanged with cooler working air from the first expansion turbine, may be located downstream of the heat exchanger to which the hot pressurised compressed working air is provided, but alternatively may be positioned upstream if required. Both the heat exchanger to which the hot pressurised air is provided, and the heat load heat exchanger may be provided as a combined apparatus, or separate apparatus as required.

Desirably, the proportion of the hot pressurised air which is fed from upstream of the first expansion turbine to the heat exchanger is controlled by a valve depending on the flow rate and temperature of the recirculating air in the recirculation loop.

Desirably, the system includes a second compressor downstream of the first compressor but upstream of the first expansion turbine, further to pressurise the working air, and the second compressor may be driven by energy recovered from the working air by the first expansion turbine. The pressurised air from the second compressor may be cooled in a secondary heat exchanger prior to providing to the first expansion turbine. Particularly where the system is for use in an aircraft, a cooling air flow for the secondary heat exchanger may be ambient ram air where the aircraft is flying, or may be fan driven air where the aircraft is on the ground.

In each case it will be appreciated that the hot pressurised air may have a substantial water content, and that it is undesirable for such damp air to be introduced into the enclosure, particularly where the enclosure is a cabin in which passengers may be transported. Thus the heat exchanger may be a condensing heat exchanger so that condensate resulting from the cooling of the hot pressurised air by the cooler expanded air from the first expansion turbine may be removed from the system.

According to a second aspect of the invention we provide an aircraft having an air conditioning system according to the first aspect of the invention.

Embodiments of the invention will now be described with reference to the accompanying drawings in which;

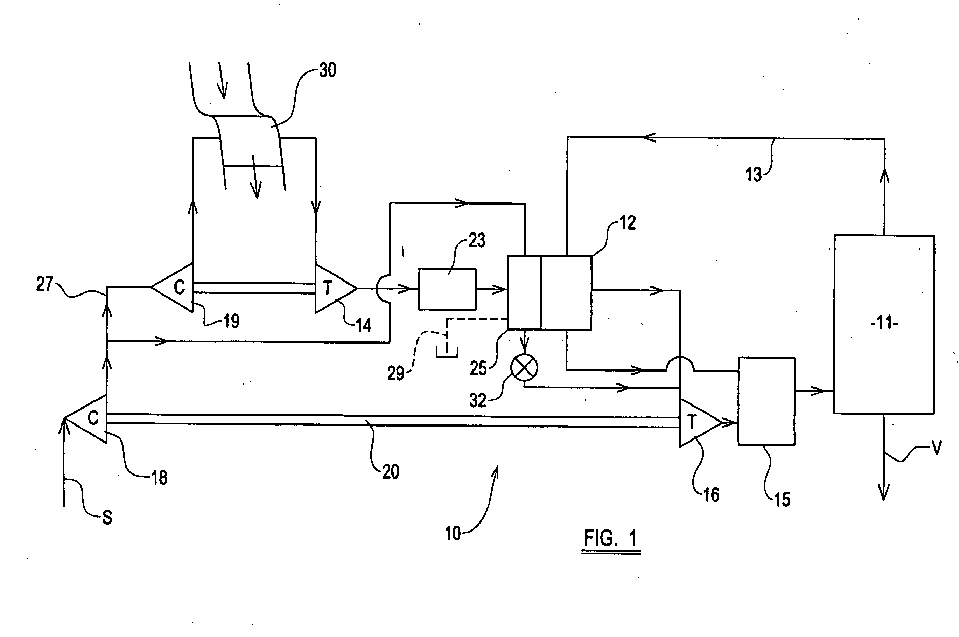

Figure 1 is a schematic illustration of an air conditioning system in accordance with the first aspect of the invention;

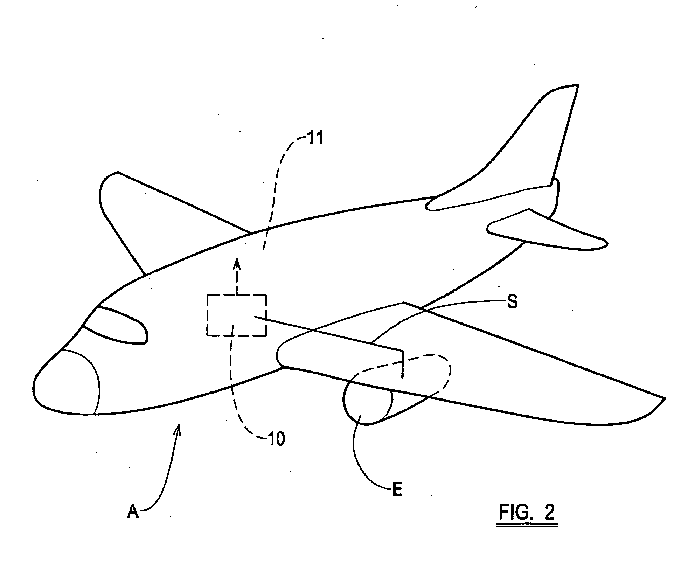

Figure 2 is an illustrative view of an aircraft having the air conditioning system of figure 1.

Referring to the drawings, an air conditioning system 10 for conditioning recirculating air from an enclosure 11 which in this example, is a cabin C for an aircraft A, includes a heat load heat exchanger 12 to which the recirculating cabin air in a recirculating loop 13 is provided, and where the heat load of the recirculating cabin air, is exchanged to cooler pressurised working air from an upstream first expansion turbine 14. The cooled recirculated cabin air is then fed to a mixing box 15 or other mixing apparatus, where the cabin air is mixed with cold expanded working air from a second expansion turbine 16 to which the working air is provided from the heat load exchanger 12.

Hot pressurised working air is fed to the first expansion turbine 14 from a dual stage compressor, which includes a first compressor 18 to which an air supply S may be provided, and a second compressor 19. The working air supply S may be pressurised air bled off from a compressor stage of a gas turbine engine E of the aircraft A, but in another application, the working air supply may be derived from elsewhere.

The first compressor 18 is carried on a common shaft 20 as the second expansion turbine 16 and the shaft 20 is driven by the turbine 16 as energy is recovered across the turbine 16 from the hot pressurised working air fed thereto.

The second compressor 19 is carried on a common shaft 21 as the first expansion turbine 14 and is driven by the turbine 14 as energy is recovered across the turbine 14 from the hot pressurised working air fed thereto.

Between the first expansion turbine 14 and the heat load heat exchanger 12, there is provided a water separator 23, of the mechanical kind for example in which air passing therethrough is constrained to swirl and centrifugally deposit water particles from the air onto an external separator surface, from where the water may be removed.

In the event that the flow of cabin air along the recirculation loop 13 is low, particularly where the cabin air may be very warm, insufficient energy may be recoverable in the heat load heat exchanger 12 and thus across the second turbine 16, efficiently to drive the first compressor 18, and thus supplementary power e.g. an electric motor may be required.

However, in accordance with the present invention, a heat exchanger 25 is provided to which a proportion of the hot pressurised air from upstream of the first expansion turbine 14 is fed along a line indicated in the drawing at 26.

In the particular dual compressor arrangement of the example, this hot pressurised air is taken from a main feed line 27 between the first 18 and second 19 compressors, although in another example, could be taken from downstream of the second compressor 19.

The heat exchanger 25 to which the hot pressurised air is provided is located in this example, between the first expansion turbine 14 and the heat load heat exchanger 12, and the cooled expanded working air from the first expansion turbine 14 is thus warmed by the hot pressurised air in the heat exchanger 25. The thus warmed expanded working air which is still cooler than the recirculating cabin air in the recirculation loop 13, is fed to the heat load heat exchanger 12, to cool the recirculating cabin air, and is then passed to the second expansion turbine 16 for further expansion and cooling. However, in accordance with the invention, the cooled pressurised working air from the heat exchanger 25 is combined with the warmed expanded air from the heat load heat exchanger 12, as indicated at 29, so that the combined working air flows are fed to the second expansion turbine 16.

The cooled pressurised working air thus provides additional energy which is recovered across the second expansion turbine 16 so that the second expansion turbine 16 may more efficiently drive the first compressor 18 and thus more greatly pressurise the incoming bleed air to improve the cooling efficiency of the system 10 as a whole.

The thus substantially cooled working air from the second expansion turbine 16 is fed to the mixing box 15 where it is mixed with the cooled recirculating cabin air in loop 13, prior to introduction into the cabin 11. If desired, if the air from the mixing box 15 is too cool for introduction into the cabin 11, the temperature of the air may be raised in another heat exchanger to which hot compressed air may be fed from the compressor 18, 19 stages of the system 10, or by mixing the overly cool air with such hot air.

In the heat exchanger 25, the hot pressurised air from upstream of the first expansion turbine 14 may be significantly cooled, such that water present in the hot pressurised air is condensed out of the working air. Preferably therefore the heat exchanger 25 is a condensing heat exchanger by which such condensate may be removed from the system 10, for example as indicated by line 29.

Between the second compressor 19 and the first expansion turbine 14, there is a secondary heat exchanger 30 in which the pressurised hot air from the second compressor 19 may be cooled by a flow of cooling air. In flight of the aircraft, such flow of cooling air may be so called ram air, flowing due to the motion of the aircraft through the air, but on the ground, such flow may be provided by a fan or the like. In each case, by cooling the pressurised air prior to feeding it to the first expansion turbine 14, the efficiency of the cooling of the first expansion turbine 14 is improved, and maximum energy may be recovered from the pressurised air flowing across the turbine 14.

Various modification may be made without departing from the scope of the invention.

For example, although the provision of the heat load heat exchanger 12 is desirable, in another arrangement this may not be required, but the recirculating cabin air in the recirculation loop 13 may simply be cooled by mixing with cold expanded air from the second expansion turbine 16.

Where a heat load heat exchanger 12 is provided, the heat exchanger 25 to which the hot pressurised working air from upstream of the first expansion turbine 14 is fed, may be positioned downstream of the heat load heat exchanger 12 although less efficient water separation from the hot pressurised working air may be the result.

In another arrangement, a dual stage compressor may not be required, but a single compressor, preferably driven from the second expansion turbine 16 may be provided.

As can be seen in the drawing, there is provided a valve 32 in the line from the heat exchanger 25 to the position 29 where the cooled compressed air flow is combined with the working air flow from the heat load heat exchanger 12. The degree of opening of the valve 32 may be set, but preferably is adjustable dynamically e.g. by a system controller, to control the proportion of the hot pressurised air which is provided to the heat exchanger 25 and hence for combining with the expanded working air from the heat load heat exchanger 12, depending upon the flow rate of recirculating air in the recirculation loop 13 and the temperature of the recirculating air. The control valve 32 may be provided elsewhere for example, in the line 26 between the first compressor 18 and the heat exchanger 25.

Although the invention particularly has been described in relation to an air conditioning system for an aircraft, the invention may be applied to other applications where the air cycle system 10 is provided to condition recirculating air from an enclosure where there is a heat load.

In the example shown in the drawings, the heat exchanger 25 and the heat load heat exchanger 12 are provides by a common apparatus, but may be separate apparatus as desired.

The system 10 described is a partially closed system in which some of the cabin 11 air is replaced by conditioned air from the supply S, and thus some provision, such as the vent V from the cabin 11 needs to be made to vent some air from the system 10 to ambient in order to maintain the air pressure in the cabin 11 of the system 10 within acceptable limits.

## Claims

1. An air cycle air conditioning system (10) for conditioning recirculating air from an enclosure (11), the system (10) including an enclosure air recirculation loop (13), a first expansion turbine (14) to which hot pressurised working air is provided, a heat load heat exchanger (12) in which a heat load of the recirculating enclosure air of the recirculation loop (13) is exchanged with cooler working air from the first expansion turbine (14), a heat exchanger (25) to which a proportion of the hot pressurised working air is provided, from upstream of the first expansion turbine (14), and in which heat is exchanged to the cooler expanded air from the first expansion turbine (14), the working air from the heat exchanger (25) expanded by the first expansion turbine (14) and the cooled pressurised working air from the heat exchanger (25) being combined prior to feeding the combined flows to a second expansion turbine (16), the system (10) including a mixing apparatus (15) in which the recirculating enclosure air from the loop (13) and the cooled combined working air flows from the second expansion turbine (16) are mixed prior to being provided to the enclosure (11).

2. A system according to claim 1 **characterised in that** the second expansion turbine (16) drives a compressor (18) of the working air, upstream of the first expansion turbine (14).

3. A system according to claim 1 or claim 2 **characterised in that** the heat load heat exchanger (12) is located downstream of the heat exchanger (25) to which the hot pressurised compressed working air is provided.

4. A system according to any one of the preceding claims **characterised in that** the proportion of the hot pressurised air which is fed from upstream of the first expansion turbine (14) to the heat exchanger is controlled by a valve (32) depending on the flow rate and temperature of the recirculating air in the recirculation loop (13).

5. A system according to any one of the preceding claims **characterised in that** the system (10) includes a second compressor (19) downstream of the first compressor (18) but upstream of the first expansion turbine (14), further to pressurise the working air.

6. A system according to claim 5 **characterised in that** the second compressor (19) is driven by energy recovered from the working air by the first expansion turbine (14).

7. A system according to claim 5 or claim 6 **characterised in that** the pressurised air from the second compressor (19) is cooled in a secondary heat exchanger (30) prior to providing to the first expansion turbine (14).

8. A system according to claim 7 which is provided in an aircraft (A), **characterised in that** a cooling air flow for the secondary heat exchanger (30) is ambient air where the aircraft (A) is flying, and fan driven air where the aircraft (A) is on the ground.

9. A system according to any one of the preceding claims **characterised in that** the heat exchanger (25) is a condensing heat exchanger so that condensate resulting from the cooling of the hot pressurised air by the cooler expanded air from the first expansion turbine (14) is removed from the system (10).

10. An aircraft (A) having an air conditioning system (10) according to any one of the preceding claims.

## Patentansprüche

1. Eine Luftzyklusklimaanlage(10) zur Konditionierung der zirkulierenden Luft von einer Kabine (11), und diese Anlage (10) beinhaltet eine Kabinenumluftschleife (13), eine erste Expansionsturbine (14), an die heiße, unter Druck stehende Betriebsluft geleitet wird, einen Belastungswärmeaustauscher (12), in dem eine Belastungswärme der Kabinenumluft der Umluftschleife (13) mit kühlerer Betriebsluft von der ersten Expansionsturbine (14) ersetzt wird, einen Wärmeaustauscher (25), an den ein Anteil der heißen, unter Druck stehenden Betriebsluft stromaufwärts von der ersten Expansionsturbine (14) bereitgestellt wird, und in dem die Wärme mit der kühleren, erweiterten Luft von der ersten Expansionsturbine (14) ersetzt wird, wobei die Betriebsluft vom Wärmeaustauscher (25) durch die erste Expansionsturbine (14) erweitert wird, und wobei die abgekühlte, unter Druck stehende Betriebsluft vom Wärmeaustauscher (25) kombiniert wird, bevor die kombinierten Luftströme an eine zweite Expansionsturbine (16) geleitet werden. Die Anlage (10) beinhaltet auch eine Mischvorrichtung (15), an die die Kabinenumluft von der Schleife (13) und die gekühlten kombinierten Arbeitsluftströme von der zweiten Expansionsturbine (16) gemischt werden, bevor sie in die Kabine (11) geleitet werden.

2. Eine Anlage nach Anspruch 1, **dadurch gekennzeichnet, dass** die zweite Expansionsturbine (16) einen Verdichter (18) der Betriebsluft antreibt, der der ersten Expansionsturbine (14) vorgeschaltet ist.

3. Eine Anlage nach Anspruch 1 oder Anspruch 2, **dadurch gekennzeichnet, dass** der Belastungswärmeaustauscher (12) dem Wärmeaustauscher (25), an den die heiße, unter Druck stehende Betriebsluft geleitet wird, nachgeschaltet ist.

4. Eine Anlage nach einem der vorangehenden Ansprüche, **dadurch gekennzeichnet, dass** der Anteil der heißen Druckluft, die vom vorgeschalteten Bereich der ersten Expansionsturbine (14) zum Wärmeaustauscher geleitet wird, durch ein Ventil (32) geregelt wird, was von der Durchflussrate und Temperatur der zirkulierenden Luft in der Umluftschleife (13) abhängig ist.

5. Eine Anlage nach einem der vorangehenden Ansprüche, **dadurch gekennzeichnet, dass** die Anlage (10) einen zweiten Verdichter (19) beinhaltet, der dem ersten Verdichter (18) nachgeschaltet, aber der ersten Expansionsturbine (14) vorgeschaltet ist, um die Betriebsluft weiter unter Druck zu setzen.

6. Eine Anlage nach Anspruch 5, **dadurch gekennzeichnet, dass** der zweite Verdichter (19) durch Energie angetrieben wird, die durch die erste Expansionsturbine (14) von der Betriebsluft wiedergewonnen wurde.

7. Eine Anlage nach Anspruch 5 oder Anspruch 6, **dadurch gekennzeichnet, dass** die Druckluft vom zweiten Verdichter (19) in einem sekundären Wärmeaustauscher (30) abgekühlt wird, bevor sie an die erste Expansionsturbine (14) geleitet wird.

8. Eine Anlage nach Anspruch 7, die in einem Flugzeug (A) bereitgestellt wird, **dadurch gekennzeichnet, dass** eine Kühlluftströmung fiir den Sekundärwärmeaustauscher (30) Umgebungsluft ist, wenn das Flugzeug (A) fliegt, und Gebläseluft, wenn das Flugzeug (A) auf dem Boden ist.

9. Eine Anlage nach einem der vorangehenden Ansprüche, **dadurch gekennzeichnet, dass** der Wärmeaustauscher (25) ein Kondensations-Wärmeaustauscher ist, so dass das aus dem Abkühlen der heißen Druckluft durch die kühlere erweiterte Luft entstandene Kondensat von der ersten Expansionsturbine (14) von der Anlage entfernt wird (10).

10. Ein Flugzeug (A) mit einer Klimaanlage (10) nach einem der vorangehenden Ansprüche.

## Revendications

1. Système de climatisation à cycle d'air (10) pour climatiser de l'air remis en circulation provenant d'une enceinte (11), le système (10) comportant une boucle de recirculation d'air (13) de l'enceinte, une première turbine de détente (14) vers laquelle de l'air de service pressurisé chaud est fourni, un échangeur de chaleur de charge thermique (12) dans lequel une charge thermique de l'air de l'enceinte remis en circulation de la boucle de circulation (13) est échangé avec un air de service plus froid provenant de la première turbine de détente (14), un échangeur de chaleur (25) vers lequel une proportion de l'air de service pressurisé chaud est fournie, depuis l'amont de la première turbine de détente (14), et dans lequel de la chaleur est échangée vers l'air détendu plus froid provenant de la première turbine de détente (14), l'air de service provenant de l'échangeur de chaleur (25) étant détendu par la première turbine de détente (14) et l'air de service pressurisé refroidi provenant de l'échangeur de chaleur (25) étant combinés avant de fournir les flux combinés vers une seconde turbine de détente (16), le système (10) comportant un appareil de mélange (15) dans lequel l'air de l'enceinte remis en circulation provenant de la boucle (13) et les flux d'air de service combinés refroidis provenant de la seconde turbine de détente (16) sont mélangés avant d'être fournis à l'enceinte (11).

2. Système selon la revendication 1,
**caractérisé en ce que** la seconde turbine de détente (16) entraîne un compresseur (18) de l'air de service, en amont de la première turbine de détente (14).

3. Système selon la revendication 1 ou la revendication 2,
**caractérisé en ce que** l'échangeur de chaleur de charge thermique (12) est situé en aval de l'échangeur de chaleur (25) vers lequel l'air de service comprimé pressurisé chaud est fourni.

4. Système selon une quelconque des revendications précédentes,
**caractérisé en ce que** la proportion de l'air pressurisé chaud qui est fourni de l'amont de la première turbine de détente (14) vers l'échangeur de chaleur est commandée par une valve (32) dépendant du débit et de la température de l'air remis en circulation dans la boucle de recirculation (13).

5. Système selon une quelconque des revendications précédentes,
**caractérisé en ce que** le système (10) comporte un second compresseur (19) en aval du premier compresseur (18) mais en amont de la première turbine de détente (14), pour pressuriser encore l'air de service.

6. Système selon la revendication 5,
**caractérisé en ce que** le second compresseur (19) est entraîné par de l'énergie récupérée à partir de l'air de service par la première turbine de détente (14).

7. Système selon la revendication 5 ou la revendication 6,
**caractérisé en ce que** l'air pressurisé provenant du second compresseur (19) est refroidi dans un échangeur de chaleur secondaire (30) avant d'être amené à la première turbine de détente (14).

8. Système selon la revendication 7, qui est prévu dans un aéronef (A),
**caractérisé en ce qu'**un flux d'air de refroidissement de l'échangeur de chaleur secondaire (30) est de l'air ambiant dans le cas où l'aéronef (A) est en vol, et de l'air entraîné par ventilateur dans le cas où l'aéronef (A) est au sol.

9. Système selon une quelconque des revendications précédentes,
**caractérisé en ce que** l'échangeur de chaleur (25) est un échangeur de chaleur de condensation de sorte qu'un condensat provenant du refroidissement de l'air pressurisé chaud par l'air détendu refroidi provenant de la première turbine de détente (14) est éliminé du système (10).

10. Aéronef (A) ayant un système de climatisation d'air (10) selon une quelconque des revendications précédentes.
